# EUROPÄISCHE PATENTANMELDUNG

(11) **EP 4 236 043 A1**
(43) Veröffentlichungstag der Anmeldung: **30.08.2023**
(21) Anmeldenummer: 23153859.6
(22) Anmeldetag: 30.01.2023
(51) Int. Cl.: H02K 9/06, H02K 9/08

(54) **GEKAPSELTE ELEKTRISCHE MASCHINE MIT EFFIZIENTER INNENKREISKÜHLUNG**

(30) Priorität: 25.02.2022 DE 102022201980
(71) Anmelder: Siemens Mobility GmbH, 81739 München (DE)
(72) Erfinder: Mucha, Oana, 90453 Nürnberg (DE); Seitz, Peter, 91224 Pommelsbrunn (DE); Wetzel, Wolfgang, 91074 Herzogenaurach (DE)
(74) Vertreter: Siemens Patent Attorneys

(57) **Zusammenfassung**

Die vorliegende Erfindung betrifft eine elektrische Maschine (10) mit einer Aktivanordnung (12) aufweisend einen Stator (14) und einen um eine Rotorachse (16) rotierbaren Rotor (18), wobei die Aktivanordnung (12) durch ein Gehäuse (28) gegenüber der Umgebung der elektrischen Maschine (10) gekapselt ist, wobei die Aktivanordnung (12) wenigstens zwei Kühlkanäle (30, 32) zum Führen von Kühlluft aufweist, die von einem ersten Volumen (34) an einem ersten axialen Ende der Aktivanordnung (12) zu einem zweiten Volumen (36) an einem zweiten axialen Ende der Aktivanordnung (12) führen, wobei in dem ersten Volumen (34) ein Lüfter (38) zum Fördern von Kühlluft in einem Kühlkreislauf als Primärströmung durch die wenigstens zwei Kühlkanäle (30, 32) vorgesehen ist, wobei in dem zweiten Volumen (36) ein strömungserzeugendes Element (40) zum Erzeugen einer Sekundärströmung vorgesehen ist.

## Beschreibung

Die vorliegende Erfindung betrifft eine gekapselte elektrische Maschine mit verbesserter Innenkreiskühlung. Ferner betrifft die vorliegende Erfindung einen Antriebsstrang, der eine derartige elektrische Maschine aufweist und ein Fahrzeug, das wenigstens eines von der elektrischen Maschine und dem Antriebsstrang aufweist.

Elektrische Maschinen sind als Generatoren und/oder elektrische Motoren weit bekannt. Die Vorteile von Permanentmagnet-Synchronmotoren (PSM) liegen dabei in den vergleichsweise geringen Rotorverlusten und damit besseren Wirkungsgraden im Vergleich etwa zur Asynchronmaschine. Weiterhin können Permanentmagnet-Synchronmotoren auch höherpolig als die Asynchronmaschine gebaut werden, ohne den Leistungsfaktor negativ zu beeinflussen. Die Höherpoligkeit der Permanentmagnet-Synchronmotoren führt zu besseren Drehmoment- und Leistungsdichten bei gegebenen Bauräumen und ermöglicht auch die Realisierung von getriebelosen Antrieben.

Bei hoch ausgenutzten gekapselten elektrischen Maschinen, etwa mit Luftkühlung, benötigt man eine intensive Entwärmung der Aktivteile, also von Rotor und Stator, über möglichst große Flächen.

Im Stand der Technik gibt es bei derartigen gekapselten elektrischen Maschinen innerhalb der Kapselung oftmals einen inneren Kühlkreislauf, durch den die im Rotor entstehende Wärme und teilweise auch die im Wickelkopf des Stators entstehende Wärme abgeführt wird. Der Stator selbst wird dadurch gekühlt, dass an einem axialen Ende Kühlluft in axial verlaufende Kühlkanäle eingespeist wird und am anderen axialen Ende wieder aus den Kühlkanälen austritt. Die Kühlkanäle sind am Außenumfang des Stators, also radial außen, geführt.

Derartige Lösungen weisen jedoch noch weiteres Verbesserungspotential auf, insbesondere hinsichtlich einer effektiven Kühlung von Rotor und Stator der elektrischen Maschine.

Es ist die Aufgabe der vorliegenden Erfindung, die aus dem Stand der Technik bekannten Nachteile zumindest teilweise zu überwinden. Es ist insbesondere die Aufgabe der vorliegenden Erfindung, eine Lösung bereitzustellen, durch welche eine elektrische Maschine mit einer effektiven Kühlung versehen werden kann.

Die Lösung der Aufgabe erfolgt erfindungsgemäß zumindest zum Teil durch eine elektrische Maschine mit den Merkmalen des Anspruchs 1. Die Lösung der Aufgabe erfolgt erfindungsgemäß ferner zumindest zum Teil durch einen Antriebsstrang mit den Merkmalen des Anspruchs 8 sowie durch ein Fahrzeug mit den Merkmalen des Anspruchs 10. Bevorzugte Ausgestaltungen der Erfindung sind in den Unteransprüchen, in der Beschreibung oder den Figuren beschrieben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Beschrieben wird eine elektrische Maschine mit einer Aktivanordnung aufweisend einen Stator und einen um eine Rotorachse rotierbaren Rotor, wobei die Aktivanordnung durch ein Gehäuse gegenüber der Umgebung der elektrischen Maschine gekapselt ist, wobei die Aktivanordnung wenigstens zwei Kühlkanäle zum Führen von Kühlluft aufweist, die von einem ersten Volumen an einem ersten axialen Ende der Aktivanordnung zu einem zweiten Volumen an einem zweiten axialen Ende der Aktivanordnung führen, wobei in dem ersten Volumen ein Lüfter zum Fördern von Kühlluft in einem gekapselten Innkühlkreislauf als Primärströmung durch die wenigstens zwei Kühlkanäle vorgesehen ist, wobei in dem zweiten Volumen ein strömungserzeugendes Element zum Erzeugen einer Sekundärströmung vorgesehen ist.

Eine derartige elektrische Maschine weist eine besonders effektive Kühlung des gekapselten Innenraums auf.

Die beschriebene elektrische Maschine kann insbesondere als Elektromotor dienen beziehungsweise betrieben werden. Jedoch ist auch eine Funktion als Generator grundsätzlich von der vorliegenden Erfindung umfasst.

Die elektrische Maschine umfasst in an sich bekannter Weise einen auch als Ständer bezeichneten Stator und einen auch als Läufer bezeichneten Rotor. Der Stator umfasst eine Statorwicklung, die auf den Rotor wirkt, wie dies bei einer permanenterregten Synchronmaschine beziehungsweise einem Permanentmagnet-Synchronmotor an sich bekannt ist.

Der Rotor ist um eine Rotorachse rotierbar. Beispielsweise kann die Rotorachse durch eine Welle verlaufen, an welcher der Rotor befestigt ist. Ferner kann der Rotor einen Tragkörper und einen an dem Tragkörper angeordneten Permanentmagnet, gegebenenfalls mit einem magnetischen Rotorjoch, zur permanent magnetischen Erregung der Statorwicklung beziehungsweise der Maschine aufweisen. Der Rotor ist beispielsweise mit im Blech als Tragkörper versenkten Magneten, etwa gemäß dem IPM-Design, vollgeblecht mit Elektroblechen im Durchmesser und beidseitigen metallischen Druckringen, auf eine einfache zylindrische Rotorwelle etwa mit einem Schrumpfsitz aufgebracht. Die Rotorwelle kann etwa aus Stahl ausgebildet sein.

Der Rotor und der Stator können gemeinsam eine Aktivanordnung ausbilden, so dass die Aktivanordnung aus Stator und Rotor bestehen kann.

Die vorbeschriebene Statorwicklung wechselwirkt entsprechend einem sie durchfließenden Strom mit den Permanentmagneten des Erregermoduls und kann insbesondere eine permanenterregte Synchronmaschine ausbilden. Vorteile der herkömmlichen permanenterregten Synchronmaschine umfassen beispielsweise das Vorsehen eines einfachen Rotors mit geringen Verlusten.

Der Stator und der Rotor beziehungsweise die Aktivanordnung sind durch ein Gehäuse gegenüber der Umgebung der elektrischen Maschine gekapselt. Unter einer Kapselung kann dabei insbesondere eine Einhausung zu verstehen sein, welche einen Luftaustausch zwischen dem Inneren der Kapselung und dem Äußeren der Kapselung verhindert.

Grundsätzlich ist es beispielsweise bei einer Verwendung der elektrischen Maschine als Traktionsmotor vorteilhaft, eine gekapselte Maschine vorzusehen, bei der Stator und Rotor nicht direkt mit Kühlluft von außen durchströmt werden, um im Fehlerfall beispielsweise eines Statorwicklungsschadens die Auswirkungen außerhalb der Maschine zu begrenzen.

Für eine Kühlung von Stator und Rotor ist innerhalb des Gehäuses beziehungsweise innerhalb der Kapselung eine Luft-Innenkreiskühlung vorgesehen. Eine derartige Kühlung arbeitet basierend auf dem Prinzip der Luftkühlung, so dass die Luft innerhalb der Kapselung in einem erzeugten Luftstrom entlang der zu kühlenden Bauteile entlangströmt und diese so entwärmt.

Hierzu weist die Aktivanordnung wenigstens zwei Kühlkanäle zum Führen von Kühlluft auf, die von einem ersten Volumen an einem ersten axialen Ende der Aktivanordnung zu einem zweiten Volumen an einem zweiten axialen Ende der Aktivanordnung führen. Wenigstens einer der Kühlkanäle kann beispielsweise als Blasleitung fungieren in welche ein im ersten Volumen angeordneter Lüfter die Kühlluft aus dem ersten Volumen fördert, während wenigstens ein anderer Kühlkanal als Saugleitung fungieren kann, durch welche die Kühlluft von dem Lüfter aus dem zweiten Volumen angesaugt wird.

Das erste Volumen wie auch das zweite Volumen kann bevorzugt in radialer Richtung vollständig in der Kapselung ausgedehnt sein und axial neben dem Rotor und Stator angeordnet sein. Das erste Volumen kann als lüfterseitiges Luftvolumen bezeichnet werden. In diesem ist der Lüfter zum Fördern von Kühlluft in einem Kühlkreislauf als Primärströmung vorgesehen. Die Primärströmung strömt somit durch die wenigstens zwei Kühlkanäle. Der Lüfter kann dabei grundsätzlich ein an sich bekannter Lüfter sein.

In dem zweiten Volumen ist ferner ein strömungserzeugendes Element zum Erzeugen einer Sekundärströmung vorgesehen. Das zweite Volumen ist somit dem ersten Volumen axial entgegengesetzt angeordnet und kann als lüfterabgewandtes Luftvolumen bezeichnet werden. Beispielsweise ist das lüfterseitige Luftvolumen axial an der Antriebsseite, also A-seitig, angeordnet und das lüfterabgewandte Luftvolumen an der B-Seite also an der nicht-Antriebsseite, oder umgekehrt.

Durch das Vorsehen des strömungserzeugenden Elements kann die Kühlung des Innenkühlkreislaufs deutlich verbessert werden.

Dadurch, dass in dem Luftvolumen eine von der Primärströmung verschiedene Sekundärströmung erzeugt wird, können Verwirbelungen des Luftstroms generiert werden. Dadurch kann die Wärmekonvektion an den zu kühlenden Bauteilen deutlich verbessert werden. Insbesondere kann es verhindert werden, dass die Luft an zu kühlenden Bauteilen, wie etwa der Erregerspule, eine unzureichende Strömungsgeschwindigkeit aufweist und damit eine Kühlung wenig effektiv ist.

Die Vergrößerung des konvektiven Wärmetransfers führt insgesamt zu einer Homogenisierung der Temperatur an den zu kühlenden Bauteilen, wie etwa der Statorwicklung, die beispielsweise aus Kupfer ausgestaltet sein kann. Hierzu kann es somit vorteilhaft sein, wenn das strömungserzeugende Element benachbart zum Wickelkopf einer Erregerspule des Stators angeordnet ist oder auf diese wirkt. Dies ermöglicht zudem, niedrigere Temperaturen im Schaltring im zweiten Volumen zu erreichen. Somit können auch bei erhöhter Maschinenausnutzung im Bereich der Schaltung weiterhin bereits qualifizierte, kostengünstigere Isoliersysteme mit niedrigerer Temperaturklasse verwendet werden. Der Aufbau der elektrischen Maschine kann so vereinfacht werden.

Darüber hinaus kann die erzeugte Luftkühlung grundsätzlich sehr homogen sein, so dass die Gefahr der Überhitzung einzelner Bauteile oder Teilen hiervon reduziert oder vollständig verhindert werden kann. Dies ist insbesondere für hoch ausgenutzte elektrische Maschinen von Vorteil, die eine effektive Kühlung benötigen. Bei hochausgenutzten, gekapselten elektrischen Maschinen, z.B. Permanentmaschinen (Permanent Magnet Synchronous Motors (PSM)), benötigt man eine intensive Entwärmung des Aktivteils und der Schaltung bei gleichzeitiger Kapselung dieser Bauteile, was erfindungsgemäß effektiv realisierbar ist.

Bevorzugt sind der Lüfter und das strömungserzeugende Element derart ausgelegt beziehungsweise können derart arbeiten, dass die von dem strömungserzeugenden Element erzeugte Sekundärströmung geringer ist, als die vom Lüfter erzeugte Kreislaufströmung beziehungsweise Primärströmung. Dadurch kann es erreicht werden, dass durch die Sekundärströmung der Volumenstrom des Lüfters in nur geringem Maße vermindert wird und die Primärströmung nicht oder nicht signifikant negativ beeinflusst wird.

Bevorzugt kann das strömungserzeugende Element derart angeordnet sein, dass die Sekundärströmung der Primärströmung beziehungsweise der Kreislaufführung zumindest zum Teil entgegengerichtet ist. Insbesondere durch eine derartige Anordnung von Lüfter und strömungserzeugendem Element können effektive Verwirbelungen erzeugt werden, welche die Kühlung durch die vorbeschriebenen Effekte verbessern können. Darüber hinaus kann insbesondere in dieser Ausgestaltung es erlaubt werden, dass die Primärströmung nicht oder nicht signifikant negativ beeinflusst wird.

Weiter bevorzugt kann das strömungserzeugende Element ein Aktivelement sein. Unter einem Aktivelement kann im Sinne der vorliegenden Erfindung ein derartiges Element verstanden werden, das auch ohne Primärströmung selbst eine Strömung erzeugt und nicht nur die Primärströmung behandelt, also etwa die Luft umleitet. In dieser Ausgestaltung kann eine besonders effektive Verbesserung der Kühlung erzeugt werden, die insbesondere unabhängig von der Primärströmung erzeugt werden kann.

Bei dem Vorsehen eines Aktivelements kann das strömungserzeugende Element beispielsweise um die Rotorachse rotierbar sein. Hierzu kann das strömungserzeugende Element beziehungsweise insbesondere aktive Teile desselben beispielsweise am Rotor oder an der Welle befestigt sein. Eine derartige Ausgestaltung kann automatisiert an die benötigte Kühlanforderung angepasst sein. Denn insbesondere bei hoher Leistung kann eine hohe Rotation des Rotors erfolgen, wodurch wiederum auch die Sekundärströmung erhöht wird. Darüber hinaus kann so eine konstruktiv einfache Ausgestaltung ermöglicht werden, da auf einen separaten Antrieb des Aktivelements verzichtet werden kann.

Beispielsweise kann das strömungserzeugende Element sich radial hinsichtlich der Rotorachse erstreckende Lamellen aufweisen. Dies können wie vorstehend angedeutet beispielsweise an der Welle und/oder an dem Rotor, wie etwa einem Trägerelement, befestigt sein. Eine derartige Ausgestaltung kombiniert einen einfachen Aufbau mit einer effektiven Erzeugung einer Sekundärströmung. Darüber hinaus kann durch Einstellung der Größe und der Anzahl der Lamellen eine effektive Anpassung an das gewünschte Anwendungsgebiet beziehungsweise an die gewünschte Kühlleistung ermöglicht werden.

Es kann weiterhin bevorzugt sein, dass die elektrische Maschine eine außerhalb des Gehäuses vorgesehene Luft-Außenkreiskühlung aufweist, wobei ein Lüfter der Luft-Außenkreiskühlung axial benachbart zu dem zweiten Volumen, insbesondere zu dem strömungserzeugenden Element vorliegt. In dieser Ausgestaltung kann die ermöglichte Kühlleistung weiter verbessert werden. Denn durch den Außenkühlkreis, der in thermischem Kontakt mit dem Innenkühlkreis ist, kann die Luft des Innenkühlkreises gekühlt werden. Hierzu ist es von Vorteil, dass der Lüfter der Luft-Außenkreiskühlung axial benachbart zu dem zweiten Volumen und genauer zu dem strömungserzeugenden Element vorliegt, da an dieser Position die Luft des Innenkreislaufs bereits Bauteile entwärmt hat und sich selbst erwärmt hat. Somit kann in dieser Ausgestaltung die Kühlung sehr effektiv sein. Eine Anordnung axial benachbart zu dem zweiten Volumen soll eine Positionierung auf der axial der Aktivanordnung gegenüberliegenden Seite des zweiten Volumens meinen.

Grundsätzlich kann es bei dem Vorsehen einer Außenkreiskühlung vorgesehen sein, dass ein als Blasleitung fungierender Kühlkanal radial außerhalb eines Kühlkanals der Außenkreiskühlung vorliegt, beispielsweise im Stator oder radial außerhalb eines Stator-Blechpakets. Dies kann die Kühlung verbessern. Es ist jedoch gleichermaßen von der vorliegenden Erfindung umfasst, dass alternativ oder zusätzlich ein als Blasleitung fungierender Kühlkanal radial innerhalb eines Kühlkanals der Außenkreiskühlung vorliegt.

Weiter bevorzugt kann das strömungserzeugende Element derart angeordnet sein, dass die Sekundärströmung auf eine Erregerspule der Aktivanordnung, insbesondere des Stators, gerichtet ist. In dieser Ausgestaltung kann somit insbesondere eine effektive Kühlung der Erregerspule vorgesehen sein. Dadurch wird insbesondere ein Bauteil besonders effektiv gekühlt, bei dem dies aufgrund der entstehenden Wärme besonders vorteilhaft ist.

Hinsichtlich weiterer Vorteile und technischer Merkmale der elektrischen Maschine wird hiermit auf die Beschreibung des Antriebsstrangs, des Fahrzeugs, die Figuren und die Beschreibung der Figuren verwiesen.

Beschrieben ist ferner ein Antriebsstrang für ein Fahrzeug, insbesondere für ein Schienenfahrzeug, wobei der Antriebsstrang einen Motor zum Antreiben eines Rades oder einer Radsatzwelle umfasst, und wobei der Motor eine elektrische Maschine wie vorstehend beschrieben ist.

Beispielsweise kann der Antriebsstrang in einem Schienenfahrzeug angeordnet sein beziehungsweise Teil des Schienenfahrzeugs sein, so dass eine gute Implementierung in bereits bestehend Systeme sowie eine breite Anwendbarkeit gegeben ist. In diesem Fall kann der Antriebsstrang etwa einen Motor, ein mit dem Motor verbundenes Getriebe, eine Radsatzwelle und eine Achskupplung zum Übertragen des Antriebsmomentes vom Getriebe auf die Radsatzwelle umfassen. Die Radsatzwelle kann dann wiederum Räder des Fahrzeugs beziehungsweise des Schienenfahrzeugs antreiben.

Im Detail geht die vorliegende Erfindung beispielsweise von einem Fahrgestell eines Schienenfahrzeugs, insbesondere einem Drehgestell, aus, wobei das Fahrgestell einen Rahmen aufweist, wobei in dem Rahmen eine Radsatzwelle gelagert ist, so dass die Radsatzwelle um eine Wellenachse rotierbar ist. In dem Rahmen in Fahrtrichtung des Fahrgestells gesehen vor oder hinter der Radsatzwelle ist die elektrische Maschine befestigt, wobei die Rotorwelle der elektrischen Maschine über ein Getriebe auf die Radsatzwelle wirkt.

Die spezifischen Vorteile eines mit dem Motor beziehungsweise der elektrischen Maschine ausgestatteten Antriebsstrangs können insbesondere darin gesehen werden, dass eine effektive Kühlung der aktiven Teile der elektrischen Maschine erlaubt wird. Ferner kann so eine gute Langzeitstabilität ermöglicht werden und ferner eine hohe Leistung bereitgestellt werden.

Hinsichtlich weiterer Vorteile und technischer Merkmale des Antriebsstrangs wird hiermit auf die Beschreibung der elektrischen Maschine, des Fahrzeugs, die Figuren und die Beschreibung der Figuren verwiesen.

Beschrieben wird ferner ein Fahrzeug, wobei das Fahrzeug wenigstens eines von einer elektrischen Maschine und einem Antriebsstrang aufweist, wie diese vorstehend beschrieben sind.

Beispielsweise kann das Fahrzeug ein Schienenfahrzeug sein, da insbesondere für derartige Fahrzeuge entsprechende Antriebsstränge beziehungsweise elektrische Maschinen geeignet sind.

Die vorstehend beschriebenen Vorteile sind auch für ein beschriebenes Fahrzeug einschlägig, so dass eine effektive Kühlung der aktiven Teile der elektrischen Maschine erlaubt wird. Ferner kann so eine gute Langzeitstabilität ermöglicht werden einhergehend mit einer hohen bereitstellbaren elektrischen Leistung.

Hinsichtlich weiterer Vorteile und technischer Merkmale des Fahrzeugs wird hiermit auf die Beschreibung der elektrischen Maschine, des Antriebsstrangs, die Figuren und die Beschreibung der Figuren verwiesen.

Weitere Einzelheiten, Merkmale und Vorteile des Gegenstandes der Erfindung ergeben sich aus den Unteransprüchen sowie aus der nachfolgenden Beschreibung der Figuren. In den Figuren zeigen:
- Fig. 1: Längsschnitt durch eine elektrische Maschine gemäß einer Ausgestaltung der vorliegenden Erfindung, und
- Fig. 2: eine Positionierung der elektrischen Maschine in einem Antriebsstrang.

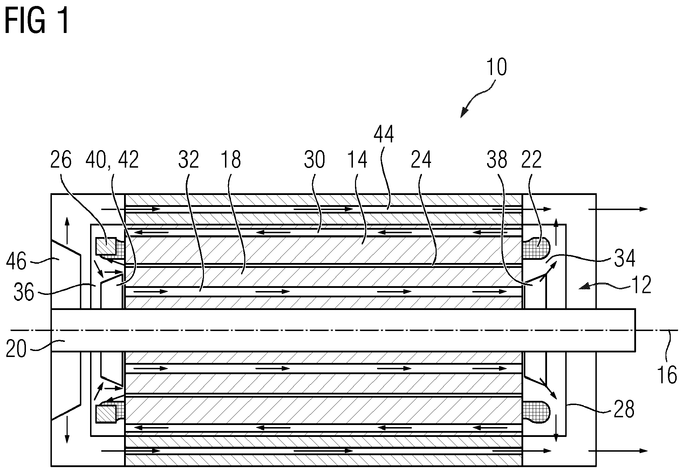

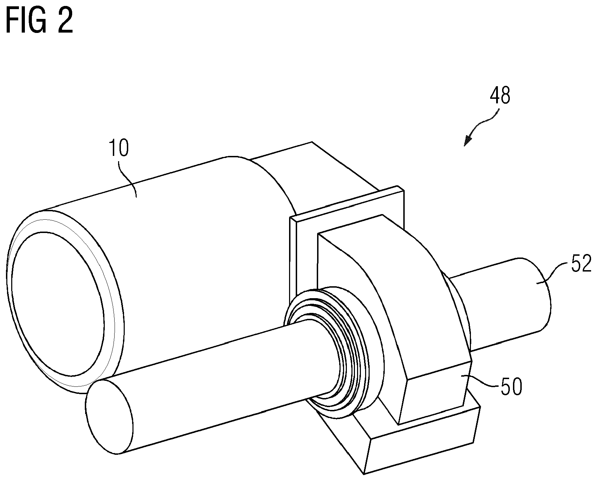

In der Figur 1 ist eine Ausgestaltung einer elektrischen Maschine 10 gezeigt. Die elektrische Maschine 10 kann insbesondere als Motor Teil eines Antriebsstrangs 48 eines Fahrzeugs, wie insbesondere eines Schienenfahrzeugs sein, wie dies in der Figur 2 gezeigt ist.

Die elektrische Maschine 10 umfasst eine Aktivanordnung 12, die einen Stator 14 und einen um eine Rotorachse 16 rotierbaren Rotor 18 aufweist. Die Rotorachse 16 kann durch eine Welle 20 verlaufen, an welcher der Rotor 18 befestigt, beispielswiese aufgeschrumpft, ist.

Der Rotor 18 umfasst ferner einen nicht gezeigten Permanentmagneten zur Magnetisierung des Rotors 18, sowie eine Erregerspule 22, die etwa als Kupferspule ausgestaltet sein kann. Die Erregerspule 22 ist Teil des Stators 14, der von dem Rotor 18 durch einen Luftspalt 24 getrennt ist. Die Erregerspule 22 kann ferner einen Schaltring 26 aufweisen.

Figur 1 zeigt ferner, dass die Aktivanordnung 12 durch ein Gehäuse 28 gegenüber der Umgebung der elektrischen Maschine 10 gekapselt ist. Innerhalb der Kapselung beziehungsweise innerhalb des Gehäuses 28 liegt ein Innenkühlkreis vor, der ein Luftkreislauf ist.

Im Detail weist die Aktivanordnung 12 wenigstens zwei Kühlkanäle 30, 32 zum Führen von Kühlluft auf, die von einem ersten Volumen 34 an einem ersten axialen Ende der Aktivanordnung 12 zu einem zweiten Volumen 36 an einem zweiten axialen Ende der Aktivanordnung 12 führen. Insbesondere sind die Kühlkanäle 30, 32 axial ausgerichtet und verteilen sich auf Rotor 18 und Stator 14.

Zur Förderung von Kühlluft in einem gekapselten Kühlkreislauf als Primärströmung durch die wenigstens zwei Kühlkanäle 30, 32 ist ein Lüfter 38 in dem ersten Volumen 34 vorgesehen. In der Ausgestaltung gemäß Figur 1 ist das erste Volumen 34 A-seitig, also an der Antriebsseite angeordnet. Es ist jedoch gleichermaßen vom Rahmen der vorliegenden Erfindung umfasst, dass das erste Volumen 34 an der nicht-Antriebsseite, also B-seitig, angeordnet ist. Gemäß Figur 1 wird die Kühlluft somit durch den als Blasleitung fungierenden Kühlkanal 30 geführt, durchströmt das zweite Volumen 36 und wird durch den als Saugleitung fungierenden Kühlkanal 32 wieder in das erste Volumen 34 und somit zu dem Lüfter 30 rückgeführt.

Bei einer derartigen Anordnung beziehungsweise durch dieses Konstruktionsprinzip erfährt der Wickelkopf der Erregerspule 22 im ersten Volumen 34 beziehungsweise auf der Druckseite des Lüfters 38 einen relativ hohen konvektiven Wärmeübergang, da er sich in der Regel in unmittelbarer Nähe des Luftaustritts des Lüfters 38 befindet und die Strömungsgeschwindigkeit des Innenkühlkreislaufs durch den Lüfterdrall relativ hoch ist.

Der Wickelkopf der Erregerspule 22 auf der Saugseite, also im zweiten Volumen 36, erfährt dagegen keine nennenswerte Drallströmung mehr, da die umgewälzte Kühlluft durch den Kühlkanal 30 in axiale Richtung umgelenkt wurde. Die Strömungsgeschwindigkeit und damit der konvektive Wärmeübergang ist lediglich im Bereich der Kühlkanalaustritte erhöht, wodurch die Temperaturverteilung im saugseitigen Wickelkopf, also im zweiten Volumen 36, in der Regel inhomogener ist und sich unerwünschte auch als Hotspots bezeichnete Heißpunkte in der Wicklung der Erregerspule 22 und ggf. im angeschlossenen Schaltring 26 ergeben können.

Um dies zu verhindern, ist es bei der hier beschriebenen elektrischen Maschine 10 vorgesehen, dass in dem zweiten Volumen 36 ein strömungserzeugendes Element 40 zum Erzeugen einer Sekundärströmung vorgesehen ist. Im Detail ist gezeigt, dass das strömungserzeugende Element 40 derart angeordnet ist, dass die Sekundärströmung der Kreislaufführung entgegengerichtet ist, also in der Figur 1 nach radial außen gerichtet ist. Dadurch ist die Sekundärströmung gleichermaßen auf die Erregerspule 22 der Aktivanordnung 12 gerichtet.

Dadurch wird es möglich, dass sich Verwirbelungen ausbilden und die Konvektion und damit die Kühlung im zweiten Volumen 36 verbessert wird.

In der Figur 1 ist ferner gezeigt, dass das strömungserzeugende Element 40 ein Aktivelement ist und dabei um die Rotorachse 16 rotierbar ist. Genauer weist das strömungserzeugende Element 40 sich radial hinsichtlich der Rotorachse 16 erstreckende Lamellen 42 auf, welche als eine Art zusätzlicher Lüfter wirken und die Sekundärströmung erzeugen.

Bei einer derartigen Anordnung, aber nicht beschränkt hierauf, ist es von Vorteil, dass die Sekundärströmung die Funktion der Saugleitung nicht behindert. Entsprechend sollte die Position und die Wirkung, insbesondere die Förderleistung des strömungserzeugenden Elements 40 auf die Position der Saugleitung oder der Saugleitungen abgestimmt sein. In der Figur 1 kann dies dadurch realisiert werden, dass die Lamellen 42 in radialer Richtung außerhalb der Saugleitung beziehungsweise dem Kühlkanal 32 enden. So wird der Volumenstrom des Innenkühlkreislaufs durch die Sekundärströmung nicht oder zumindest nicht signifikant vermindert.

Um die in dem Innenkreislauf strömende Luft zu kühlen ist ferner ein außerhalb des Gehäuses 28 beziehungsweise der Kapselung angeordnete Luft-Außenkreiskühlung vorgesehen. Diese weist einen Außenkühlkanal 44 auf, der durch einen als Außenlüfter wirkenden Lüfter 46 von außen mit Kühlluft versorgt werden kann. Hinsichtlich der Position des Lüfters 46 ist es vorteilhaft, dass dieser axial benachbart zu dem zweiten Volumen 36 vorliegt.

Eine vorteilhafte Ausführung ist dergestalt, dass der Kühlkanal 30 radial außerhalb des Kühlkanals 44 und dabei innerhalb des Gehäuses 28 angeordnet ist, um die Thermik der Maschine insgesamt zu verbessern.

Figur 2 zeigt einen Antriebsstrang 48 für ein Fahrzeug, insbesondere für ein Schienenfahrzeug, das eine zuvor beschriebene elektrische Maschine 10 aufweist. Genauer ist in der Figur 2 die elektrische Maschine 10 als Motor gezeigt, die mit einem Getriebe 50 verbunden ist. Durch das Getriebe 50 verläuft eine Radsatzwelle 52, die insbesondere über eine Kupplung mit dem Getriebe 50 wechselwirkt und durch welche Räder des Fahrzeugs antreibbar sind.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: elektrische Maschine
- 12: Aktivanordnung
- 14: Stator
- 16: Rotorachse
- 18: Rotor
- 20: Welle
- 22: Erregerspule
- 24: Luftspalt
- 26: Schaltring
- 28: Gehäuse
- 30: Kühlkanal
- 32: Kühlkanal
- 34: erstes Volumen
- 36: zweites Volumen
- 38: Lüfter
- 40: strömungserzeugendes Element
- 42: Lamelle
- 44: Außenkühlkanal
- 46: Lüfter
- 48: Antriebsstrang
- 50: Getriebe
- 52: Radsatzwelle

## Patentansprüche

1. Elektrische Maschine (10) mit einer Aktivanordnung (12) aufweisend einen Stator (14) und einen um eine Rotorachse (16) rotierbaren Rotor (18), wobei die Aktivanordnung (12) durch ein Gehäuse (28) gegenüber der Umgebung der elektrischen Maschine (10) gekapselt ist, wobei die Aktivanordnung (12) wenigstens zwei Kühlkanäle (30, 32) zum Führen von Kühlluft aufweist, die von einem ersten Volumen (34) an einem ersten axialen Ende der Aktivanordnung (12) zu einem zweiten Volumen (36) an einem zweiten axialen Ende der Aktivanordnung (12) führen, wobei in dem ersten Volumen (34) ein Lüfter (38) zum Fördern von Kühlluft in einem gekapselten Innenkühlkreislauf als Primärströmung durch die wenigstens zwei Kühlkanäle (30, 32) vorgesehen ist, **dadurch gekennzeichnet, dass** in dem zweiten Volumen (36) ein strömungserzeugendes Element (40) zum Erzeugen einer Sekundärströmung vorgesehen ist.

2. Elektrische Maschine (10) nach Anspruch 1, **dadurch gekennzeichnet, dass** das strömungserzeugende Element (40) derart angeordnet ist, dass die Sekundärströmung der Primärströmung zumindest zum Teil entgegengerichtet ist.

3. Elektrische Maschine (10)) nach einem der Ansprüche 1 oder 2, **dadurch gekennzeichnet, dass** das strömungserzeugende Element (40) ein Aktivelement ist.

4. Elektrische Maschine (10)) nach einem der Ansprüche 1 bis 3, **dadurch gekennzeichnet, dass** das strömungserzeugende Element (40) um die Rotorachse (16) rotierbar ist.

5. Elektrische Maschine (10) nach Anspruch 4, **dadurch gekennzeichnet, dass** das strömungserzeugende Element (40) sich radial hinsichtlich der Rotorachse (16) erstreckende Lamellen (42) aufweist.

6. Elektrische Maschine (10) nach einem der Ansprüche 1 bis 5, **dadurch gekennzeichnet, dass** die elektrische Maschine (10) eine außerhalb des Gehäuses (28) vorgesehene Luft-Außenkreiskühlung aufweist, wobei ein Lüfter (46) der Luft-Außenkreiskühlung axial benachbart zu dem zweiten Volumen (36) vorliegt, und wobei ein als Blasleitung fungierender Kühlkanal (30) radial außerhalb eines Kühlkanals (44) der Außenkreiskühlung vorliegt.

7. Elektrische Maschine (10) nach einem der Ansprüche 1 bis 6, **dadurch gekennzeichnet, dass** die elektrische Maschine (10) eine außerhalb des Gehäuses (28) vorgesehene Luft-Außenkreiskühlung aufweist, wobei ein Lüfter (46) der Luft-Außenkreiskühlung axial benachbart zu dem zweiten Volumen (36) vorliegt, und wobei ein als Blasleitung fungierender Kühlkanal 30 radial innerhalb eines Kühlkanals (44) der Außenkreiskühlung vorliegt.

8. Elektrische Maschine (10) nach einem der Ansprüche 1 bis 7, **dadurch gekennzeichnet, dass** das strömungserzeugende Element (40) derart angeordnet ist, dass die Sekundärströmung auf eine Erregerspule (22) der Aktivanordnung (12) gerichtet ist.

9. Antriebsstrang (48) für ein Fahrzeug, insbesondere für ein Schienenfahrzeug, wobei der Antriebsstrang (48) einen Motor zum Antreiben eines Rades oder einer Radsatzwelle (52) umfasst, **dadurch gekennzeichnet, dass** der Motor eine elektrische Maschine (10) nach einem der Ansprüche 1 bis 8 ist.

10. Fahrzeug, **dadurch gekennzeichnet, dass** das Fahrzeug wenigstens eines von einer elektrischen Maschine (10) nach einem der Ansprüche 1 bis 8 und einem Antriebsstrang (48) nach Anspruch 9 aufweist, insbesondere wobei das Fahrzeug ein Schienenfahrzeug ist.
